(19) Europäisches Patentamt
European Patent Office
Office européen des brevets

(11) **EP 2 346 194 B1**

(12) **EUROPEAN PATENT SPECIFICATION**

(45) Date of publication and mention
of the grant of the patent:
**19.09.2012 Bulletin 2012/38**

(51) Int Cl.:
***H04J 14/02*** *(2006.01)*

(21) Application number: **10195441.0**

(22) Date of filing: **16.12.2010**

(54) **Method for optimizing transmission capacity**

Verfahren zur Optimierung einer Übertragungskapazität

Procédé d'optimisation d'une capacité de transmission

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.01.2010 FR 1050251**

(43) Date of publication of application:
**20.07.2011 Bulletin 2011/29**

(73) Proprietor: **Alcatel Lucent
75007 Paris (FR)**

(72) Inventors:
• **Renaudier, Jérémie
91620, NOZAY (FR)**
• **Salsi, Massimiliano
91620, NOZAY (FR)**

(74) Representative: **Sciaux, Edmond et al
Alcatel-Lucent International
Intellectual Property & Standards
32 Avenue Kléber
92700 Colombes (FR)**

(56) References cited:
**US-A1- 2004 130 774**

**Description**

The present invention pertains to a method for optimizing the transmission capacity of a transmission line within a data transmission network, such as an optical network.

In the field of transmission networks, it is known how to connect nodes by a transmission line. This transmission line is essentially based on a conducting wire for the purposes of electrical transmission, or on an optical fibre for the purposes of optical transmission.

In order to increase the distance that may be covered by such a communication line, it may be composed of successive sections, each section comprising one segment made up of a length of conducting wire/optical fibre, and an amplifier in order to regenerate the signal by amplifying it so as to offset the losses experienced by transmitting along said segment.

It is also known, in order to increase capacity, i.e. the throughput of transmissible data, how to break a frequency band down into a plurality of channels by carrying out wavelength division multiplexing (WDM).

The capacity C of the transmission line is expressed as the throughput R transmissible for each channel, multiplied by the number N of channels. The number of channels is determined by the frequency band(width) B that may be used, and by the frequency width $\Delta\lambda$ of a channel, assuming that the channels are of equal widths.

The frequency bandwidth B depends on the type of modulation and on the transmission medium. Until a new technological breakthrough appears, this value is roughly constant and at the very least has an upper bound. It is therefore not possible to increase the capacity C while also increasing the frequency bandwidth B.

In the field of optical networks, for historical reasons, technology has until very recently been unable to vary the filter characteristics in terms of frequency and width. It has not been conceivable to vary the frequency width $\Delta\lambda$ of a channel. Thus, many optical systems are currently based on an ITU-T standard that imposes a predefined grid with a channel frequency width equal to 50 GHz. This grid makes it possible to easily align the frequencies of source emitting lasers with the receivers' central frequencies, as well as with filters, as needed for both transmission and reception. An example of a prior art device can be found disclosed in US 2004/130774.

A recent technological advance has made it possible, using source lasers with adjustable central frequencies and filters which are configurable (both in terms of central frequency and bandwidth filtered), to conceive of varying the frequency width $\Delta\lambda$ of the channels of a WDM system.

The purpose of the present document, in this transmission-network context, is to disclose a method making it possible to optimize the frequency width $\Delta\lambda$ in order to offer a greater transmission capacity C for a given distance over a given transmission line.

According to one characteristic of the invention, the frequency width $\Delta\lambda$ of said channels is variable, the optimal capacity C is obtained for an optimal frequency width $\Delta\lambda$ of said channels, this optimal frequency width $\Delta\lambda$ being determined as a function of a transmission-performance criterion, which characterizes said transmission line.

Said transmission-performance criterion advantageously makes it possible to characterize a transmission line, with respect to the occurring problem, in a manner conventional for a reference line, and thereby transposable to an actual transmission line.

According to another characteristic of the invention, the optimal frequency waves are determined by means of a graph curve obtained by characterizing the transmission line as a function of the transmission-performance criterion.

According to another characteristic of the invention, the transmission line is made up of non-homogeneous segments and the transmission-performance criterion is the weighted nonlinear phase, $\Phi_W$.

According to another characteristic of the invention, the transmission line is made up of non-homogeneous segments and the transmission-performance criterion is the nonlinear phase, $\Phi_{NL}$.

According to another characteristic of the invention, the transmission line is made up of non-homogeneous segments and the transmission-performance criterion is the integrated power, $P_{int}$.

According to another characteristic of the invention, the integrated power, $P_{int}$, is determined by integrating the power levels actually injected throughout the entire transmission line.

According to one characteristic of the invention, the method further comprises a step of configuring the emitters, emission filters, receivers, and reception filters of the transmission system, as a function of the values of the channels' central wavelengths and the frequency width of said channels.

Other characteristics, details, and advantages of the invention will become more clearly apparent from the detailed description given below by way of example with reference to the drawings, in which:

- Figure 1 depicts a system capable of supporting the method of the present invention,
- Figure 2 gives multiple breakdowns of a single frequency band into channels with different frequency widths,
- Figure 3 depicts an example graph,
- Figure 4 depicts an application of the method.

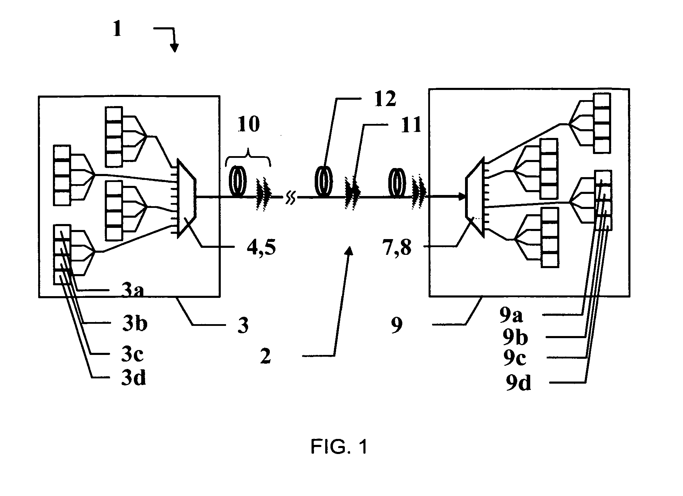

Figure 1 depicts a typical transmission system 1 capable of implementing the method of the present invention. Such a transmission system 1 comprises an emitting node 3 and a receiving node 9 linked to one another by a transmission line 2 at the respective ends to which they are connected. Within the emitting node 3 are arranged a plurality of elementary emitters 3a-3d. Each of these elementary emitters 3a-3d emits on a central frequency $\lambda i$ which is specific to one elementary emission signal. All of the elementary emitters 3a-3d are linked to a multiplexer 5 which overlaps the elementary emissions signals coming from the various elementary emitters 3a-3d before sending the resulting composite signal over the transmission line 2. An input or emission filter 4 is advantageously placed within the multiplexer 5. This filter 4 is such that it guarantees that the elementary frequency bands actually used by each of the elementary emitters 3a-3d do not overlap. These elementary frequency bands are also known as channels 15. The emission filter 4 thus guarantees that the channels 15 are actually separated. Such a filter 4 thereby acts as a multiple bandpass filter comprising a band centered around each central frequency $\lambda i$ and with a width such that two neighboring channels 15 are at most frequency-contiguous.

Within the receiving node 9, the composite signal is demultiplexed by a demultiplexer which divides the composite signal into elementary reception signals. These elementary reception signals are as many in number as the elementary emission signals, and they are respectively centered around the same central frequencies $\lambda i$. The demultiplexer 7 distributes these signals to elementary receivers 9a-9d. These elementary receivers 9a-9d are as many in number as the elementary emitters 3a-3d and are respectively tuned to the same central frequencies $\lambda i$. An output or reception filter 8 is advantageously placed within the demultiplexer 7. This reception filter 8 is roughly identical to the emission filter 4. Its function is to strengthen the actual separation of the channels 15.

Within such transmission system 1, a method optimizing the data capacity transmissible over said transmission line 2 may be implemented.

As previously seen, the capacity C of a transmission line 2 is expressed as the bitrate R transmissible for each channel 15, multiplied by the frequency bandwidth B, divided by the frequency width $\Delta\lambda$ of a channel 15.

The frequency bandwidth B is a constant, so it is not possible to increase the capacity C by increasing B.

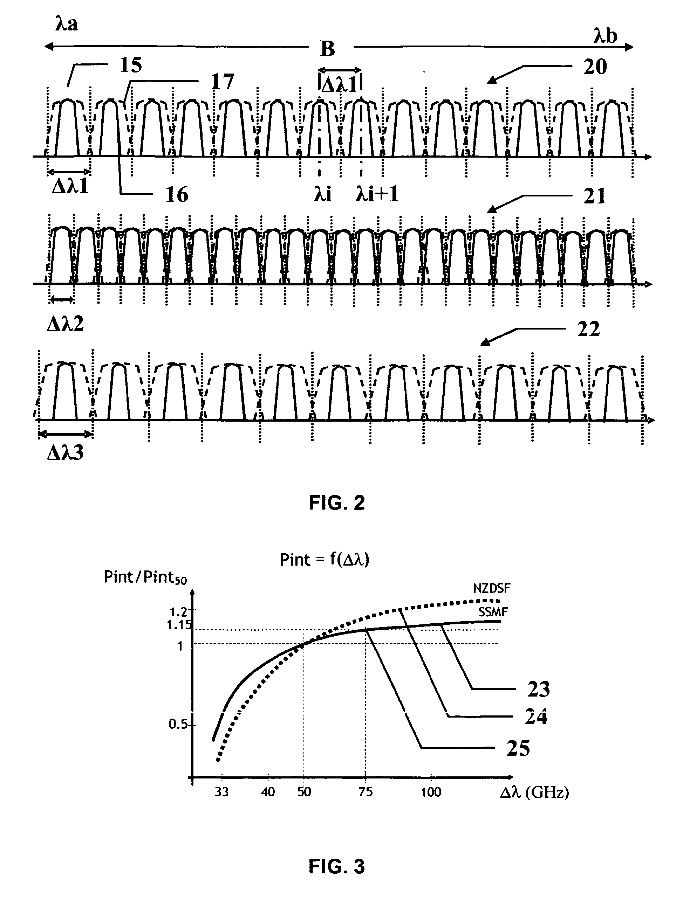

It is currently possible, using configurable emitters 3, receivers 9, and filters 4, 8, to vary the channel's 15 frequency width $\Delta\lambda$. Figure 2 illustrates three examples. The spectrum diagram 20 depicts a frequency grid obtained by dividing a frequency band B with a first mean frequency width $\Delta\lambda 1$, for example one equal to 50GHz. The spectrum diagram 21 depicts a frequency grid obtained by dividing the same frequency band B with a second frequency width $\Delta\lambda 2$ less than the first one $\Delta\lambda 1$. The width B being the same, it is thereby possible to break down a larger number of channels 15. On the other hand, the spectrum diagram 22 depicts a frequency grid obtained by dividing the same frequency band B with a third frequency width $\Delta\lambda 3$ greater than the first one $\Delta\lambda 1$. As the width B is the same, this leads to a lesser number of channels 15.

It may be noted here that with the channels chosen to be identical, the frequency width $\Delta\lambda$ is not only the same width as a channel 15, but also the same as the space between two contiguous channels, defined by the frequency distance between the central frequencies $\lambda i$ and $\lambda i+1$ of two contiguous channels.

Each of these frequency diagrams 20-22 also shows the filter's range in dotted lines, both in the input 4 and the output 8. It may also be noted that the frequency width $\Delta\lambda$ defines the width of each "module" of the filter 4, 8, each "module" being centered around a central frequency $\lambda i$ of a channel 15.

In order to increase the capacity C transmissible on a transmission line 2 with a given frequency band B, it might seem tempting, by applying the preceding formula, to increase the number N of channels 15, by dividing B with the smallest possible frequency width $\Delta\lambda$. However, this principle reaches a limit. Numerous effects, such as crosstalk, as well as non-linear effects (cross-phase modulation, or XPM), four-wave mixing, non-linear phase noise, etc. limit the performance that can actually be achieved. Non-linear effects, which particularly act by introducing individual or mutual disruptions between the channels 15, are harmful and increase as the length of the transmission line 2 increases.

Thus, for a given transmission line 2, there is an optimal frequency width $\Delta\lambda$ that achieves a compromise in that it maximizes the capacity C of said transmission line 2, while keeping the consequences of the disruptive effects below an acceptable threshold for transmission quality. Quite naturally, the maximum achievable capacity decreases with the length of the transmission line 2, which defines a distance travelled by the signal. Thus, a decrease in the frequency width $\Delta\lambda$ makes it possible to increase capacity C, but reduces the maximum achievable distance. Reciprocally, an increase in the distance travelled may be obtained by increasing the frequency width $\Delta\lambda$, but this goes along with a decrease in capacity C.

Most commonly, a transmission line 2 is not continuous. Thus, as depicted in Figure 1, it comprises a succession of sections 10. Each section 10 typically comprises an essentially passive segment 12 with a high linear extension, such as a segment of conducting wire or a segment of optical fibre, and at least one active and somewhat occasionally-acting component, such as an amplifier 11. This creates discontinuities along the transmission line 2, and makes the variable length of the transmission line 2 alone irrelevant for the purposes of attempting to characterize a transmission line in order to determine the optimal frequency width $\Delta\lambda$. The frequency width function $\Delta\lambda$ as a function of the length of the transmission line 2 is certainly monotone (increasing) but also proves to be discontinuous owing to discontinuities in the composition of the transmission line 2.

One important advantage of the inventive method is to represent and characterize the transmission line 2 by a more relevant variable that makes it possible to construct a simpler-to-use function. This advantageous variable is, according to one essential characteristic of the invention, a transmission-performance criterion. Below are several examples of such a transmission-performance criterion. In all circumstances, this transmission-performance criterion is indicative, with regard to the existing problem of determining an optimal frequency width $\Delta\lambda$, of a transmission quality of the transmission line 2.

In all of its variations, this criterion, several variations of which are proposed below as examples, provides a characteristic representation of the transmission line 2 with regard to its transmission properties and therefore its relationship between a frequency width $\Delta\lambda$ and a capacity. Thus, by characterizing, through determining the optimal frequency width $\Delta\lambda$ which guarantees an optimal capacity, a transmission line exhibiting a given performance criterion value, regardless of how said transmission line is constructed, the result of the optimal frequency width $\Delta\lambda$ is transposable to any transmission line 2 exhibiting the same performance criterion value. Thus, after characterization, for example in the form of an optimal frequency width curve $\Delta\lambda$ = F (performance criterion), simply measuring the value of the performance criterion for any transmission line makes it possible to determine the optimal frequency width $\Delta\lambda$ that optimizes capacity.

It has been seen that the transmission line 2 comprises a plurality of segments 12. Whenever these segments 12 are homogeneous, meaning that whenever different segments 12 are made of the same material, i.e. for optical fibres that all the segments are fibres of the same type (SSMF, NZDSF, etc), a value that may advantageously be used as the performance criterion is the non-linear phase $\Phi_{NL}$.

This non-linear phase $\Phi_{NL}$ is described in detail in the document [A1]: J.-C Antona, S. Bigo, Physical design and performance estimation of heterogeneous optical transmission systems, C. R. Physique (2008), doi:10.1016/j.crhy. 2008.11.002., which is helpful to refer to.

It is defined by the formula:

$$\Phi_{NL} = \frac{2\pi}{\lambda} \int_{link} \left( \frac{n_2 P}{A_{eff}} \right)(z)dz = \frac{2\pi}{\lambda} M \left( \frac{n_2 PL_{eff}}{A_{eff}} \bigg|_{\substack{line \\ fiber}} + \frac{n_2 PL_{eff}}{A_{eff}} \bigg|_{DCF} \right),$$

where:

$\lambda$ is the wavelength
P is the input power within the transmission line in question,
$L_{eff}$ is the effective length of the transmission line,
$n_2$ is the non-linearity index,
$A_{eff}$ is the line's effective cross-section,
M is the number of segments,
where the integral is calculated over the entire transmission line (or "link"),
where the index "line fibre" concerns the portion made up of standard fibres,
where the index "DCF" concerns the portion made up of dispersion compensating fibres interspersed at regular intervals between the standard fibres.

Continuing to assume a situation in which the segments 12 are homogenous, it is still possible to use integrated power, $P_{int}$, as a transmission-performance criterion. It should be noted that the two are equivalent because the integrated power $P_{int}$ is simply proportional to the non-linear phase $\Phi_{NL}$.

In the more general situation in which the segments 12 are not homogeneous, with some segments of one type and at least one segment of another type, the non-linear phase $\Phi_{NL}$ is not a suitable indicator. This means it makes sense to universalize and prioritize as a transmission-performance criterion, the weighted non-linear phase, $\Phi_W$, which makes the non-linear phase universal, in the event of non-homogeneous segments. The aforementioned document [A1] details the weighted non-linear phase $\Phi_W$, and its properties, and is helpful to refer to. The weighted non-linear phase, $\Phi_W$, is obtained by separating the homogeneous transmission line into k homogeneous portions, and by calculating for each homogeneous transmission line portion a non-linear phase $\Phi_{NLl}$ using the previously employed formula. Next, these differences are totalled using a weighted total:

$$\Phi_w = \sum_{i=1}^{k} \frac{\Phi_{NLi}}{NLT_i},$$

where:

$\Phi_{NLi}$: the non-linear phase of the $i^{th}$ homogeneous portion,

NLTi: $i^{th}$ weighting coefficient, and non-linearity threshold of the $i^{th}$ homogeneous portion.

NLTi is a weighting coefficient such that 1/NLTi is proportional to the $i^{th}$ homogeneous portion's contribution to the entire transmission line's non-linear phase. Several ways to calculate NLTi are indicated in the document [A1].

The method determining the optimal frequency width $\Delta\lambda$ comprises one step of determining, for a transmission line 2, its performance criterion, followed by a determination of the optimal frequency width $\Delta\lambda$ as a function of said performance criterion.

In the remainder of the description, the method is detailed in a situation in which the performance criterion employed is integrated power $P_{int}$.

Integrated power $P_{int}$ is a value obtained, in a known manner, by integrating the power emitted, within the frequency band B, along the transmission line 2.

In an example assuming a transmission line 2 typical of an optical network, comprising p sections 10, an example for how to calculate said integrated power $P_{int}$ is indicated.

Integrated power, $P_{int}$, is calculated using the formula:

$$P_{int} = \Sigma P_i, \text{ for } i=1..p,$$

where

- $P_i$ is the power injected at the input of the $i^{th}$ section 10 of the transmission line 2, and
- p is the number of sections 10.

For simplicity's sake, it is assumed, as is often the case in optical networks, that the gain of each section 10's amplifier 11 is adjusted in order to exactly offset the losses experienced along the associated segment 12. Thus, for each section 10, the power at the output is equal to the power injected at the input. Integrated power $P_{int}$ is then obtained by integrating the power levels injected for each of the segments 10. If a power level $P_0$ is injected into the $1^{st}$ section, that same power level must be injected into the input of each of the other two sections 10. Thus, $P_{int} = p.P_0$. Integrated power $P_{int}$ depends on the power initially injected into the input of the transmission line 2, and increases with the length of the transmission line 2. In this situation, an image of said distance may be counted by the number of segments 10.

Figure 3 depicts an example of a graph curve 23, 24 showing integrated power, $P_{int}$, on its y-axis, and showing the optimal frequency width $\Delta\lambda$ that maximizes the capacity of the data that can be transmitted on its x-axis. The y-axis, for the sake of uniformity, advantageously shows a standardized integrated power, assumed to be equal to 1 for a spacing of 50 GHz. The actual value on the y-axis is a ratio of $P_{int}/P_{int50}$, where $P_{int50}$ is a reference integrated power value obtained with a spacing of 50 GHz, all other things being equal.

According to the method, the power $P_{int}$ determined during the first step is standardized by dividing it by the reference integrated power $P_{int50}$.

The same graph in Figure 3 depicts two curves. The curve 23 is the one obtained for an SSMF optical fibre, while the curve 24 is the one obtained for an NZDSF optical fibre.

The point 25 is one example of the use of said graph. It is assumed that the first step of the method determines an integrated power $P_{int}$ 1.15 times greater than the reference integrated power. The 1.15 point is selected on the y-axis. It is assumed that the transmission line 2 being optimized is made up of SSMF fibres. The point 25 is located at the intersection of y-axis 1.15 and the curve 23. The x-axis of this point 25, equal to 75 (GHz), gives the optimal frequency width $\Delta\lambda$ that must be used to configure said transmission line 2.

In order to increase the capacity C, the frequency width $\Delta\lambda$ is advantageously as small as possible. The optimal frequency $\Delta\lambda$ width determined as a function of integrated power $P_{int}$ is minimal. It is still possible, without the risk of harming the transmission quality, to assume a greater frequency width $\Delta\lambda$.

As the curves 23 and 24 increase, the greater the integrated power $P_{int}$ is, and the less possible it is to configure the transmission line 2 with a low frequency width $\Delta\lambda$, and the less possible it is to increase capacity C.

The graph is constructed by experimental characterization of a transmission line 2. Such a graph curve 23, 24 is thereby determined for a type of transmission medium. A distinction is thereby made between an SSMF optical fibre transmission line 2 or for an NZDSF optical fibre transmission line 2. Once a type of medium has been determined, a minimum acceptable quality criterion is set. This quality criterion, which may be specified by a standard or linked to the needs of a transmission application, is for example defined by means of an optical signal-to-noise ratio (OSNR) or a quality factor ($Q^2$) with a minimum threshold value. Next a transmission line 2 is constructed exhibiting a given integrated power $P_{int}$. This may be carried out in a laboratory by successively connecting/disconnecting the amplifiers' alternators, the fibres' coils, and if any, the attenuators or other passive or active optical components, in order to reproduce the successive sections of a transmission line. It should be noted that as the integrated power, $P_{int}$, is a significant parameter with regard to the existing problem, it is not necessary to identically reproduce a transmission line approximating the actual line; it is sufficient to construct a line exhibiting the same integrated power, $P_{int}$, in order to be representative.

Once this line with a given integrated power, $P_{int}$, is obtained, a WDM emitter and receiver is connected to it. By varying the grid of channels 15 by changing the frequency width $\Delta\lambda$, it is possible to reduce the frequency width $\Delta\lambda$ until the minimum threshold value $\Delta\lambda$ past which the quality criterion is no longer guaranteed has been determined. This threshold value $\Delta\lambda$ provides a point on the graph curve 23, 24.

By iterating this process for different integrated power values, $P_{int}$, it is thereby possible to construct a graph curve 23, 24 point by point.

Given the advantageous properties of said curve's continuity and monotony, it is possible to take into consideration only a limit number of points and to interpolate/extrapolate the full curve.

The graph curve 23, 24 may thereby be carried out prior to its use and stored to be used by the method.

The method continues, after determining the optimal frequency bandwidth $\Delta\lambda$ (which maximizes the capacity C) by configuring the transmission system.

A step determines the number N of channels 15 by dividing the frequency band B by a previously determined $\Delta\lambda$ optimal frequency width.

On this occasion, the actual number of elementary emitters 3a-3d and/or elementary receivers 9a-9d available within the system, in the system, in order to set the upper bound of the calculated value N.

A step then determines the central wavelengths $\lambda i$ of the channels 15 as a function of said optimal frequency $\Delta\lambda$ width. This may be done by means of the formula:

$$\lambda i = \lambda a + (i-1/2).\Delta\lambda, \text{ for } i = 1..N,$$

where:

- $\lambda i$ is the central wavelength of the $i^{th}$ channel,
- $\lambda a$ is the minimum wavelength of frequency band B,
- $\Delta\lambda$ is the optimal frequency width.

Based on these parameters depending on said optimal frequency width $\Delta\lambda$ a step configures the emitters 3a-3d, the emission filters 4, the receivers 9a-9d and the reception filters 8 of the transmission system 1.

Each of the emitters 3a-3d, and respectively the receivers 9a-9d, is configured centred on its own central wavelength $\lambda i$. Likewise, the configuration of the input 4 or output 8 filters, uses the central wavelengths $\lambda i$, as well as the frequency width $\Delta\lambda$.

The equipment to be configured is respectively arranged at the two ends of said transmission line 2. The configuration settings are transmitted to them by any available means of communication, for example via the communication network.

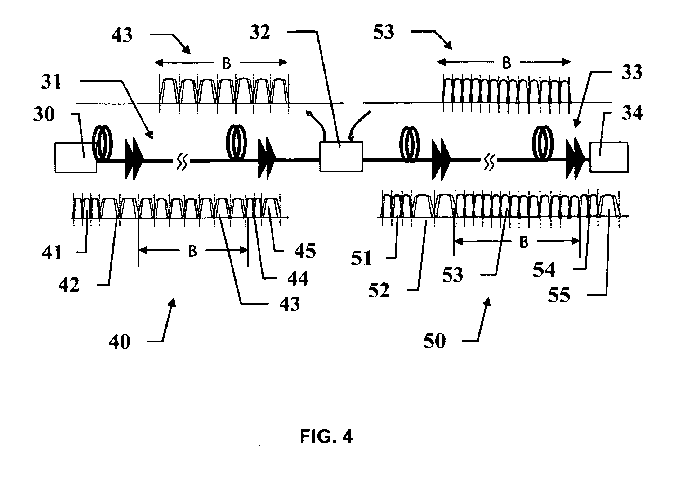

Referring now to Figure 4, one possible application of the preceding method will be described. Figure 4 depicts part of a transparent optical network depicted as three nodes, each node comprising at least one WDM receiver and/or at least one WDM emitter. A first node 30, is linked by a first transmission line 31 to a second central node 32, itself linked by a second transmission line 33 to a third node 34. The central node 32 receives a first WDM grid 40, whose spectrum is depicted to the lower-left of the figure, and transmits a second grid 50, whose spectrum is depicted to the lower-right of the figure. This grid 40 comprises five series of channels whose bitrate characteristics may vary from one series to another. Thus, in the figure, a single series 41 comprises 3 channels. It is followed, from left to right, by a series 42 of two channels. Next comes a series 43 with a frequency bandwidth B composed of 7 channels, itself followed by a series 44 of 2 channels and a series 45 comprising 1 channel.

The central node 32 is an add/drop node. For the sake of the example, it is assumed that the frequency band B corresponding to the series 43 is extracted within said central node 32. A new signal may be inserted within the same bandwidth B.

It may be assumed that the bandwidth $\Delta\lambda$ used to configure the series 43 over the band B for the upstream transmission line 31 was selected as a function of the transmission characteristics, and particularly the integrated power that characterizes said upstream transmission line 31. In the example in the figure, the band B has thereby been broken down into 7 channels.

However, nothing implies that the downstream transmission line 33 exhibits the same characteristics. The inventive method should therefore be applied separately for each transmission line. It appears that the downstream transmission line 33 exhibits a better transmission quality. This may, for example, be due to a transmission distance less than that of the upstream transmission line 31, and results in a lesser integrated power $P_{int}$. Applying the method to the partial frequency band B here makes it possible to reduce the bandwidth $\Delta\lambda$, which makes it possible to break down a series 53 of 13 channels (instead of the 7 from before) down into the same bandwidth B. The grid 50 at the output of the central node 32 thereafter comprises this series 51, 52, 54, and 55, which are respectively identical to the series present at the inputs 41, 42, 44, and 45. The part initially occupied by the series 43 is extracted and replaced by the newly configured and inserted series 53.

The previous example is applied to two contiguous nodes. However, the inventive method is applicable to the optimization of a transmission passing through multiple nodes of the network. In such a situation, the method modifies all of the traversed nodes accordingly.

The method, applied in this manner, enables a reconfiguration of the various nodes 30, 32, 34 of a transparent optical network in order to optimize the transmitted capacity as a function of the transmission quality of each of the transmission lines 31, 33 that make it up.

**Claims**

1. A method for optimizing the transmission capacity, C, of a transmission line (2) comprising successive sections (10), each section (10) comprising a segment (12) and an amplifier (11), within a transmission system (1) defining channels (15) by breaking down a frequency band (B) using wavelength division multiplexing, the frequency width ($\Delta\lambda$) of said channels (15) being variable, and **characterized in that** the optimal capacity C is obtained for an optimal frequency width ($\Delta\lambda$), and **in that** the optimal frequency width ($\Delta\lambda$) is determined as a function of a transmission-performance criterion, which is characteristic of said transmission line (2).

2. A method according to claim 1, wherein the optimal frequency width ($\Delta\lambda$) is determined by means of a graph curve (23, 24) obtained by characterizing the transmission line (2) as a function of the transmission-performance criterion.

3. A method according to claim 1 or 2, wherein the transmission line (2) is composed of non-homogeneous segments (12) and wherein the transmission-performance criterion is the weighted non-linear phase $\Phi_W$.

4. A method according to claim 1 or 2, wherein the transmission line (2) is composed of non-homogeneous segments (12) and wherein the transmission-performance criterion is the non-linear phase $\Phi_{NL}$.

5. A method according to claim 1 or 2, wherein the transmission line (2) is composed of non-homogeneous segments (12) and wherein the transmission-performance criterion is the integrated power, $P_{int}$.

6. A method according to claim 5, wherein the integrated power, $P_{int}$, is determined by integrating the power actually injected along the entire transmission line (2).

7. A method according to claim 6, wherein the integrated power, $P_{int}$, is calculated by the formula.

$$P_{int} = \Sigma P_i, \text{ for } i=1..p,$$

where

   - $P_i$ is the power injected at the input of the $i^{th}$ section (10) of the transmission line (2), and
   - p is the number of sections (10).

8. A method according to claim **7,** wherein the gain of each amplifier (11) is adjusted to offset the power losses occurring along the associated segment (12), and wherein the integrated power, $P_{int}$, is calculated by the formula:

$$P_{int} = P_0 \cdot p,$$

where

- $P_0$ is the power injected at the start of the transmission line (2),
- p is the number of sections (10).

9. A method according to any one of the preceding claims, wherein a number N of channels (15) is determined by dividing the frequency band (B) by the optimal frequency width ($\Delta\lambda$).

10. A method according to claim **9,** wherein the central wavelengths ($\lambda i$) of the channels (15) are determined by the formula"

$$\lambda i = \lambda a + (i-1/2) \cdot \Delta\lambda, \text{ for } i = 1..N,$$

where:

- $\lambda i$ is the central wavelength of the i$^{th}$ channel,
- $\lambda a$ is the minimum wavelength of frequency band B,
- $\Delta\lambda$ is the optimal frequency width.

11. A method according to claim **10,** further comprising a step of configuring the emitters (3), emission fillers (4), receivers (9), and reception filters (8) of the transmission system (1), as a function of the central wavelength values ($\lambda i$) of the channels (15) and the frequency width ($\Delta\lambda$) of said channels (15).

12. A method according to any of the claims **1** to **11,** wherein the transmission line (2) links two nodes of a transparent optical network.

**Patentansprüche**

1. Verfahren zur Optimierung der Übertragungskapazität, C, einer Übertragungsleitung (2) mit aufeinanderfolgenden Abschnitten (10), wobei jeder Abschnitt (10) ein Segment (12) und einen Verstärker (11) umfasst, innerhalb eines Übertragungssystems (1), welches Kanäle (15) definiert, indem es ein Frequenzband (B) unter Verwendung von Wellenlängenmultiplex aufteilt, wobei die Frequenzbreite ($\Delta\lambda$) der besagten Kanäle (15) variabel ist, und **dadurch gekennzeichnet, dass** die optimale Kapazität C für eine optimale Frequenzbreite ($\Delta\lambda$) erreicht wird, und dass die optimale Frequenzbreite ($\Delta\lambda$) in Abhängigkeit von einem Übertragungs-Leistungskriterium ermittelt wird, welches für die besagte Übertragungsleitung (2) kennzeichnend ist.

2. Verfahren nach Anspruch 1, wobei die maximale Frequenzbreite ($\Delta\lambda$) mittels einer Diagrammkurve (23, 24), die durch das Charakterisieren der Übertragungsleitung (2) in Abhängigkeit von dem Übertragungs-Leistungs-Kriterium erhalten wird, ermittelt wird.

3. Verfahren nach Anspruch **1** oder **2,** wobei die Übertragungsleitung (2) aus nicht homogenen Segmenten (12) besteht, und wobei das Übertragungs-Leistungs-Kriterium die gewichtete nicht lineare Phase $\Phi_W$ ist.

4. Verfahren nach Anspruch **1** oder **2,** wobei die Übertragungsleitung (2) aus nicht homogenen Segmenten (12) besteht, und wobei das Übertragungs-Leistungs-Kriterium die nicht lineare Phase $\Phi_{NL}$ ist.

5. Verfahren nach Anspruch **1** oder **2,** wobei die Übertragungsleitung (2) aus nicht homogenen Segmenten (12) besteht, und wobei das Übertragungs-Leistungs-Kriterium die integrierte Leistung, $P_{int}$, ist.

6. Verfahren nach Anspruch **5,** wobei die integrierte Leistung, $P_{int}$, durch Integrieren der momentan längs der gesamten Übertragungsleitung (2) eingespeisten Leistung bestimmt wird.

7. Verfahren nach Anspruch **6,** wobei die integrierte Leistung, $P_{int}$, anhand der folgenden Formel berechnet wird:

$$P_{int} = \Sigma P_i \text{, für i=1..p,}$$

wobei

- $P_i$ die am Eingang des i-ten Abschnitts (10) der Übertragungsleitung (2) eingespeiste Leistung ist, und
- p die Anzahl der Abschnitte (10) ist.

8. Verfahren nach Anspruch **7,** wobei die Verstärkung eines jeden Verstärkers (11) angepasst wird, um die längs des zugeordneten Segments (12) auftretenden Leistungsverluste auszugleichen, und wobei die integrierte Leistung, $P_{int}$, anhand der folgenden Formel berechnet wird:

$$P_{int} = P_0 . p,$$

wobei

- $P_0$ die am Anfang der Übertragungsleitung (2) eingespeiste Leistung ist, und
- p die Anzahl der Abschnitte (10) ist.

9. Verfahren nach einem beliebigen der vorstehenden Ansprüche, wobei eine Anzahl N von Kanälen (15) durch Dividieren des Frequenzbands (B) durch die optimale Frequenzbreite ($\Delta\lambda$) bestimmt wird.

10. Verfahren nach Anspruch **9,** wobei die Zentralwellenlängen ($\lambda i$) der Kanäle (15) anhand der folgenden Formel bestimmt werden:

$$\lambda i = \lambda a + (i-1/2) . \Delta\lambda, \text{ für i = 1..N,}$$

wobei:

- $\lambda i$ die Zentrallängenwelle des i-ten Kanals ist,
- $\lambda a$ die maximale Wellenlänge des Frequenzbands B, ist,
- $\Delta\lambda$ die optimale Frequenzbreite ist.

11. Verfahren nach Anspruch **10,** weiterhin umfassend einen Schritt des Konfigurierens der Emitter (3), Emissionsfilter (4), Empfänger (9) und Empfangsfilter (8) des Übertragungssystems (1) in Abhängigkeit von den Zentralwellenlängenwerten ($\lambda i$) der Kanäle (15) und der Frequenzbreite ($\Delta\lambda$) der besagten Kanäle (15).

12. Verfahren nach einem beliebigen der Ansprüche **1** bis **11,** wobei die Übertragungsleitung (2) zwei Knoten eines transparenten optischen Netzwerks verbindet.

**Revendications**

1. Procédé d'optimisation de la capacité de transmission, C, d'une ligne de transmission (2) comprenant des sections (10) successives, chaque section (10) comprenant un segment (12) et un amplificateur (11), à l'intérieur d'un système de transmission (1) définissant des canaux (15) en décomposant une bande de fréquences (B) en utilisant le multiplexage par répartition en longueur d'onde, la largeur de fréquence ($\Delta\lambda$) desdits canaux (15) étant variable, et **caractérisé en ce que** la capacité optimale C est obtenue pour une largeur de fréquence optimale ($\Delta\lambda$), et **en ce**

**que** la largeur de fréquence optimale (Δλ) est déterminée en fonction d'un critère de transmission-performances, qui est caractéristique de ladite ligne de transmission (2).

2. Procédé selon la revendication 1, dans lequel la largeur de fréquence optimale (Δλ) est déterminée au moyen d'une courbe graphique (23, 24) obtenue en caractérisant la ligne de transmission (2) en fonction du critère de transmission-performances.

3. Procédé selon la revendication 1 ou 2, dans lequel la ligne de transmission (2) est composée de segments non homogènes (12) et dans lequel le critère de transmission-performances est la phase non linéaire pondérée $\Phi_W$.

4. Procédé selon la revendication 1 ou 2, dans lequel la ligne de transmission (2) est composée de segments non homogènes (12) et dans lequel le critère de transmission-performances est la phase non linéaire $\Phi_{NL}$.

5. Procédé selon la revendication 1 ou 2, dans lequel la ligne de transmission (2) est composée de segments non homogènes (12) et dans lequel le critère de transmission-performances est la puissance intégrée, $P_{int}$.

6. Procédé selon la revendication 5, dans lequel la puissance intégrée, $P_{int}$, est déterminée en intégrant la puissance effectivement injectée le long de l'ensemble de la ligne de transmission (2).

7. Procédé selon la revendication 6, dans lequel la puissance intégrée, $P_{int}$, est calculée par la formule :

$$P_{int} = \Sigma P_i \text{ , pour i=1..p,}$$

dans laquelle

- $P_i$ est la puissance injectée à l'entrée de la $i^{\text{ème}}$ section (10) de la ligne de transmission (2) et
- p est le nombre de sections (10).

8. Procédé selon la revendication 7, dans lequel le gain de chaque amplificateur (11) est ajusté pour décaler les pertes de puissance qui se produisent le long du segment (12) associé, et dans lequel la puissance intégrée, $P_{int}$, est calculée par la formule :

$$P_{int} = P_0.p,$$

dans laquelle

- $P_0$ est la puissance injectée au début de la ligne de transmission (2),
- p est le nombre de sections (10).

9. Procédé selon l'une quelconque des revendications précédentes, dans lequel un nombre N de canaux (15) est déterminé en divisant la bande de fréquences (B) par la largeur de fréquence optimale (Δλ).

10. Procédé selon la revendication 9, dans lequel les longueurs d'onde centrales (λi) des canaux (15) sont déterminées par la formule :

$$\lambda i = \lambda a + (i-1/2).\ \Delta\lambda \text{, pour } i = 1..N,$$

dans laquelle :

- λi est la longueur d'onde centrale du $i^{\text{ème}}$ canal,
- λa est la longueur d'onde minimale de la bande de fréquences B,
- Δλ est la largeur de fréquence optimale.

**11.** Procédé selon la revendication 10, comprenant en outre une étape de configuration des émetteurs (3), des filtres d'émission (4), des récepteurs (9) et des filtres de réception (8) du système de transmission (1), en fonction des valeurs de longueur d'onde centrale ($\lambda i$) des canaux (15) et de la largeur de fréquence ($\Delta\lambda$) desdits canaux (15).

**12.** Procédé selon l'une quelconque des revendications 1 à 11, dans lequel la ligne de transmission (2) relie deux noeuds d'un réseau optique transparent.

FIG. 1

**FIG. 2**

**FIG. 3**

**FIG. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004130774 A

**Non-patent literature cited in the description**

- **J.-C ANTONA ; S. BIGO.** Physical design and performance estimation of heterogeneous optical transmission systems. *C. R. Physique,* 2008